# EUROPÄISCHE PATENTANMELDUNG

(11) **EP 4 289 712 A1**
(43) Veröffentlichungstag der Anmeldung: **13.12.2023**
(21) Anmeldenummer: 23172832.0
(22) Anmeldetag: 11.05.2023
(51) Int. Cl.: B62K 19/32, B62K 21/10

(54) **LENKSYSTEM FÜR FAHRRADLENKER**

(30) Priorität: 08.06.2022 DE 202022103224 U
(71) Anmelder: Canyon Bicycles GmbH, 56073 Koblenz (DE)
(72) Erfinder: THUMM, Johannes, 79539 Lörrach (DE)
(74) Vertreter: dompatent von Kreisler Selting Werner - Partnerschaft von Patent- und Rechtsanwälten mbB

(57) **Zusammenfassung**

Ein Lenksystem für Fahrradlenker weist ein am Gabelschaft (66), insbesondere oberhalb eines oberen Lagerelements (60) fixiertes Halteelement (10) auf. Zwischen zwei Lagerelementen (60) ist ein Fixierelement (74) angeordnet. Das Fixierelement (74) ist nicht unmittelbar mit dem Gabelschaft (66) verbunden, sondern mit Hilfe einer Verbindungseinrichtung (62) mit dem Halteelement (10) insbesondere durch Formschluss verbunden.

## Beschreibung

Die Erfindung betrifft ein Lenksystem für Fahrradlenker.

Lenksysteme für Fahrradlenker umfassen üblicherweise zwei in einem Gabelrohr eines Fahrradrahmens angeordnete Lagerelemente, bei denen es sich üblicherweise um Kugellager handelt. Diese dienen zum schwenkbaren Lagern eines Gabelschafts einer Fahrradgabel. Der Gabelschaft ist hierbei üblicherweise über eine Gabelbrücke mit zwei Gabelbeinen verbunden. Am oberen freien Ende des Gabelschafts erfolgt eine Verbindung mit einem Lenkervorbau.

Mit dem Gabelschaft kann beispielsweise ein Lenkanschlag verbunden sein. Beispielsweise ist aus DE 20 2012 008 119.5 ein Lenkanschlag bekannt, der ein erstes am Gabelschaft einer Fahrradgabel klemmend fixierbares Anschlagelement aufweist. Ein zweites Anschlagelement, das zur Begrenzung eines Lenkeinschlags dient, wirkt mit dem ersten Anschlagelement zusammen. Das zweite Anschlagelement ist mit zwei Schrauben an einer Oberseite des Oberrohrs befestigt.

Aufgabe der Erfindung ist es, ein Lenksystem für Fahrradlenker zu schaffen, das zusätzliche Funktionen aufweist.

Die Lösung der Aufgabe erfolgt erfindungsgemäß durch ein Lenksystem mit den Merkmalen des Anspruchs 1.

Das erfindungsgemäße Lenksystem für Fahrräder weist einen Gabelschaft auf, der über zwei Lagerelemente, bei denen es sich insbesondere um Kugellager handelt, in einem Gabelrohr eines Fahrradrahmens schwenkbar gelagert ist. Mit dem Gabelschaft ist ein Halteelement verbunden. Das Halteelement, das insbesondere ringförmig ausgebildet sein kann und den Gabelschaft vorzugsweise vollständig umgibt, ist am Gabelschaft oberhalb des oberen Lagerelements fixiert. Das Halteelement ist somit insbesondere zwischen dem oberen Lagerelement und dem Lenkervorbau angeordnet. Vorzugsweise kann eine klemmende Fixierung durch Vorsehen eines Klemmelements erfolgen, wobei es besonders bevorzugt ist, dass das Halteelement ringförmig ausgebildet ist und einen Schlitz aufweist, sodass mit Hilfe einer Klemmschraube oder dergleichen auf einfache Weise ein klemmendes Fixieren des Halteelements am Gabelschaft erfolgen kann.

Ferner weist das erfindungsgemäße Lenksystem ein Fixierelement auf. Das Fixierelement ist zwischen den beiden Lagerelementen angeordnet. Das Fixierelement ist somit innerhalb des Gabelrohrs angeordnet und insbesondere durch das Gabelrohr vor Verschmutzungen geschützt. Das Fixierelement dient beispielsweise zum Verbinden mit einer Lenkungs-Stabilisiereinrichtung. Die Lenkungs-Stabilisiereinrichtung dient insbesondere zur Stabilisierung der Geradeausfahrt. Bevorzugt ist als Lenkungs-Stabilisierungseinrichtung ein Federelement vorgesehen, sodass die Lenkungs-Stabilisierungseinrichtung zumindest ein Federelement aufweist. Durch das Federelement, bei dem es sich um ein elastisches Element, ein dehnbares Band, eine Feder oder dergleichen handeln kann, wird eine Rückstellkraft erzeugt. Diese Rückstellkraft wird durch den Lenkeinschlag erzeugt, so dass ein Rückstellmoment entsteht. Bevorzugt ist es, dass die Lenkungs-Stabilisierungseinrichtung zumindest teilweise im Oberrohr des Fahrradrahmens angeordnet ist. Besonders bevorzugt ist es, dass die Lenkungs-Stabilisierungseinrichtung von außen nicht sichtbar ist und insofern vollständig im Oberrohr und im Gabelrohr des Rahmens angeordnet ist. Beispielsweise können zwei bandförmig ausgebildete Stabilisierungselemente einander gegenüberliegend an dem Fixierelement befestigt sein. Die beiden bandförmigen Stabilisierungselemente sind vorzugsweise in Richtung des Oberrohrs geführt und sind selbst elastisch ausgebildet und/oder mit einem elastischen Element verbunden. Die Lenkungs-Stabilisierungseinrichtung kann auch als Drehfeder ausgebildet sein oder eine Drehfeder aufweisen. Das Fixierelement kann auch mit einer anderen Einrichtung verbunden oder als eine solche ausgebildet sein. Beispielsweise kann es sich um einen Lenkanschlag handeln, der sodann zwischen den beiden Lagerelementen angeordnet ist.

Unabhängig von der genauen Ausgestaltung und Funktion des Fixierelements sowie des Halteelements besteht das wesentliche Element der Erfindung darin, dass das Fixierelement mit dem Halteelement über eine Verbindungseinrichtung miteinander verbunden ist. Insofern kann erfindungsgemäß das oberhalb des oberen Lagerelements angeordnete Halteelement, das insbesondere gut zugänglich ist und auf einfache Weise, beispielsweise klemmend mit dem Gabelschaft verbunden sein kann, mit einem innerhalb des Gabelrohrs angeordneten Fixierelement verbunden werden. Das Fixierelement muss somit nicht selbst fest mit dem Gabelschaft klemmend oder auf eine andere Weise verbunden werden. Es ist bevorzugt, dass eine rotatorische Verbindung zwischen dem Halteelement und dem Fixierelement durch die Verbindungseinrichtung realisiert ist. Die rotatorische Verbindung erfolgt hierbei in besonders bevorzugter Ausführungsform durch einen Formschluss. Erfindungsgemäß ist es somit nicht erforderlich, das innerhalb des Gabelrohrs angeordnete Fixierelement mit dem Gabelschaft fest zu verbinden. Insbesondere eine rotatorische Verbindung zur Kraftübertragung in Rotationsrichtung ist nicht erforderlich. Insofern ist beispielsweise auch eine Öffnung im Rahmen, insbesondere im Gabelrohr nicht erforderlich, durch die das Fixierelement zum Verbinden mit dem Gabelschaft zugänglich sein müsste.

Vorzugsweise weist die Verbindungseinrichtung einen Verbindungsring auf, der den Gabelschaft umgibt und zur formschlüssigen rotatorischen Verbindung Ansätze und/oder Ausnehmungen aufweist, die mit Ansätzen und/oder Ausnehmungen des Fixierelements zusammenwirken. Bei dem Verbindungsring kann es sich um ein gesondertes Element handeln. Es kann sich bei dem Verbindungsring aber auch um das Halteelement handeln. Vorzugsweise handelt es sich bei dem Verbindungsring um ein selbständiges Element, da hierdurch die Montage vereinfacht ist. Der Verbindungsring ist in dieser bevorzugten Ausführungsform insbesondere formschlüssig mit dem Halteelement verbunden. Vorzugsweise weist der Verbindungsring Ansätze und/oder Ausnehmungen auf, die mit am Halteelement vorgesehenen Ansätzen und/oder Ausnehmungen zusammenwirken, um Rotationskräfte zuverlässig übertragen zu können.

Vorzugsweise ist der Verbindungsring derart ausgebildet, dass er zumindest teilringförmig, insbesondere voll-ringförmig ausgebildet ist. Der Verbindungsring weist eine Außenfläche auf, an der in bevorzugter Ausführungsform das obere Lagerelement anliegt. Insbesondere liegt ein Innenring eines oberen Lagerelements an der Außenfläche an. Der Verbindungsring ist somit vorzugsweise innerhalb des Lagerelements angeordnet und trägt zumindest den Innenring des Lagerelements in besonders bevorzugter Ausführungsform. Der Verbindungsring weist entsprechende Ausnehmungen und/oder Ansätze auf, die das ringförmige Element bzw. die ringförmige Anlagefläche gegebenenfalls unterbrechen.

Das Fixierelement ist vorzugsweise auch gegen ein Verrutschen in Längsrichtung des Gabelschafts fixiert. Dies kann beispielsweise dadurch erfolgen, dass der Gabelschaft einen konischen Bereich aufweist, der sich in Richtung des unteren Lagerelements aufweitet. Hierdurch ist die axiale Lage des Fixierelements bzw. die Lage des Fixierelements in Längsrichtung des Gabelschafts definiert. Auch kann auf dem Gabelschaft ein Längs-Halteelement, wie beispielsweise eine Hülse, mit dem Gabelrohr und/oder dem Gabelschaft verbundene Ansätze oder dergleichen vorgesehen sein. Auch kann die Verbindung zwischen dem Fixierelement und der Verbindungseinrichtung, insbesondere dem Verbindungsring derart erfolgen, dass eine rastende Verbindung erfolgt, um ein axiales Verschieben des Fixierelements innerhalb des Gabelrohrs zu vermeiden.

In einer Weiterbildung der Erfindung kann in dem Halteelement und/oder der Verbindungseinrichtung, insbesondere der Verbindungsring eine Aussparung zum Hindurchführen von Leitungen vorgesehen ist. Bei Leitungen handelt es sich beispielsweise um Kabel, Bowdenzüge und dergleichen. Mit Hilfe des erfindungsgemäßen Lenkanschlags ist es somit möglich, Leitungen ins Innere des Gabelschaftes oder auch seitlich neben dem Gabelschaft in das Steuerrohr des Fahrradrahmens einzuführen und sodann durch den Fahrradrahmen beispielsweise zu einer elektrischen oder mechanischen Schaltung zu führen.

In einer besonders bevorzugten Weiterbildung ist zusätzlich ein Lenkanschlag vorgesehen. Hierzu ist vorzugsweise das Halteelement als ein erstes Anschlagelement ausgebildet und/oder mit einem ersten Anschlagelement verbunden. Das erste Anschlagelement weist zwei Anschläge auf und wirkt mit einem zweiten, beispielsweise am oder im Oberrohr angeordneten Anschlagelement zusammen.

Vorzugsweise ist das erste Anschlagelement ringförmig ausgebildet und umgibt den Gabelschaft vorzugsweise vollständig. Besonders bevorzugt ist es, dass das insbesondere ringförmig ausgebildete erste Anschlagelement durch ein Klemmelement am Gabelschaft fixierbar ist. Dies ist in besonders bevorzugter Ausführungsform dadurch realisiert, dass das erste Anschlagelement ringförmig ausgebildet ist und einen Schlitz aufweist. Mit Hilfe eines insbesondere als Schraube ausgebildeten Klemmelements kann ein klemmendes Fixieren des ersten Anschlagelements am Gabelschaft auf einfache Weise realisiert werden. Bevorzugt ist es insbesondere, dass das Haltelement als erstes Anschlagelement ausgebildet ist.

Besonders bevorzugt ist es, dass die beiden Anschläge des ersten Anschlagelements Anschlagflächen aufweisen. Diese Flächen berühren in den jeweiligen Grenzwinkeln, bei einem extremen rechten oder linken Einschlag des Lenkers, das zweite Anschlagelement. Die beiden Anschlagsflächen weisen zueinander vorzugsweise einen Winkel von weniger als 300° auf. Insbesondere ist der Winkel kleiner als 250° und besonders bevorzugt kleiner als 180° ist. Durch das zweite Anschlagelement, das auch eine gewisse Breite aufweist verringert sich der maximal mögliche Lenkwinkel um beispielsweise 10° bis 20°. Der Lenker kann somit, bezogen auf die Fahrtrichtung um 70° bis 100° eingeschlagen werden, bevor die linke oder rechte Anschlagfläche das zweite Anschlagelement berührt.

Des Weiteren ist es bevorzugt, dass das erste Anschlagelement als Abdeckelement, insbesondere Abdeckring, insbesondere für das obere Steuerlager dient. Das insbesondere ringförmig ausgebildete erste Anschlagelement weist somit eine zusätzliche Schutzfunktion, insbesondere vor Verschmutzung für das obere Steuerlager auf. Besonders bevorzugt ist es, dass die mindestens eine Aussparung zum Durchführen von Leitungen auf eine der Anschlagfläche gegenüberliegenden bzw. abgewandten Seite der Anschlagfläche vorgesehen ist. Beim Vorsehen von zwei Anschlagflächen und mindestens zwei Aussparungen ist es bevorzugt, dass jeweils zumindest eine der Aussparungen je Anschlag jeweils auf der Anschlagfläche abgewandten oder gegenüberliegenden Seite angeordnet ist. Es handelt sich hierbei um diejenige Seite, die im montierten Zustand in Fahrtrichtung weist.

Die mindestens eine Aussparung ist vorzugsweise derart ausgebildet, dass diese nach außen offen ist. Es handelt sich somit in bevorzugter Ausführungsform nicht um eine Durchgangsöffnung, sondern um eine Ausnehmung oder Einbuchtung. Relevant ist hierbei, dass die mindestens eine Aussparung in montiertem Zustand des ersten Anschlagelements derart ausgebildet ist, dass Leitungen durch die Aussparung in das Gabelrohr des Fahrradrahmens eingeführt werden können. Somit ist es auf einfache Weise möglich, beispielsweise Leitungen von einer Brems- und/oder Schalthebeleinheit seitlich an dem ersten Anschlagelement im Bereich der Aussparung in den Rahmen, insbesondere das Gabelrohr des Rahmens einzuführen.

Das zweite Anschlagelement ist mittelbar oder unmittelbar am Fahrradrahmen fixierbar. Vorzugsweise erfolgt eine Fixierung in Bereich des Oberrohrs des Fahrradrahmens. Hierbei ist es möglich, das zweite Anschlagelement auf einer Oberseite des Oberrohrs anzuordnen. Da dies jedoch Schmutzablagerungen in diesem Bereich hervorruft und gegebenenfalls auch verletzungsträchtig sein kann, ist es in besonders bevorzugter Ausführungsform bevorzugt, das zweite Anschlagelement im Fahrradrahmen, insbesondere im Oberrohr des Fahrradrahmens anzuordnen. Das zweite Anschlagelement ist somit von außen im Wesentlichen nicht sichtbar. Im montierten Zustand ist es insofern bevorzugt, dass das zweite Anschlagelement unterhalb einer Oberseite des Oberrohrs angeordnet ist. Entsprechend ist auch die Anordnung des ersten Anschlagelements vorzugsweise derart, dass dies unterhalb der Oberseite des Oberrohrs angeordnet ist. Das Vorsehen des zweiten Anschlagelements im, insbesondere innerhalb des Fahrradrahmens, insbesondere des Oberrohrs, stellt eine von dem Vorsehen mindestens einer Aussparung zum Durchführen von Leitungen unabhängige Erfindung dar, wobei jedoch die Kombination beider Erfindungen eine vorteilhafte Weiterbildung dargestellt.

Vorzugsweise weist das Oberrohr eine Ausnehmung auf, in der das zweite Anschlagelement angeordnet ist. Insbesondere kann das zweite Anschlagelement in diese Ausnehmung eingesteckt werden. Die Fixierung kann über entsprechende Fixierungsmittel, über Rastelemente oder auch klemmend, insbesondere auch allein aufgrund des Formschlusses, erfolgen. Die Ausnehmung, in der das zweite Anschlagelement angeordnet ist, ist vorzugsweise in Richtung des Gabelschafts des Rahmens offen.

Besonders bevorzugt ist es, dass das zweite Anschlagelement ein Halteelement aufweist, das zum Verbinden mit dem Fahrradrahmen, insbesondere zum Einstecken in die Ausnehmung dient. Ferner weist das zweite Anschlagelement in bevorzugter Weiterbildung einen Anschlag auf. Der Anschlag ist vorzugsweise über einen Verbindungssteg mit dem Haltelement verbunden. Hierbei ist es besonders bevorzugt, dass dieser Verbindungssteg als Sollbruchstelle ausgebildet ist. Dies hat den Vorteil, dass beim Auftreten großer Kräfte eine Beschädigung des Fahrradrahmens im Bereich der Anordnung des Halteelements vermieden ist, da der Anschlag vom Halteelement abbricht. Hierbei wird ein großer Betrag an Energie absorbiert, so dass weiterhin das Risiko des Beschädigens des Oberrohrs durch am Lenker befestigte Bauteile verringert ist.

Bei einer weiteren bevorzugten Ausführungsform der Erfindung ist an einer Oberseite des ersten Anschlagelements ein, insbesondere ringförmig ausgebildetes Abdeckelement vorgesehen. Mit Hilfe dieses Abdeckelements ist es besonders bevorzugt, die Aussparungen abzudecken, um ein Eindringen von Wasser und Schmutz zu vermeiden. Bevorzugt ist es daher, dass das Abdeckelement eine Durchgangsöffnung aufweist, durch die die Leitungen in Richtung der mindestens einen Aussparung im ersten Anschlagelement hindurchgeführt werden können. Vorzugsweise ist die mindestens eine Durchgangsöffnung des Abdeckelements mit einem Verschlusselement verschlossen. Dies umschließt die hindurchgeführten Leitungen vorzugsweise im Wesentlichen dichtend. Besonders bevorzugt ist es, dass das Verschlusselement aus einem elastischen Kunststoffmaterial wie einem Gummi hergestellt ist und mindestens einen Schlitz aufweist, um Leitungen hindurchzuführen. Insbesondere ist ein kreuzförmiger Schlitz vorgesehen.

Da es besonders bevorzugt ist, dass das erste Anschlagelement bzw. das Halteelement klemmend mit dem Gabelschaft verbunden ist, ist es möglich, eine auf die Steuerlager aufzubringende Vorspannung aufrecht zu erhalten. Zur Montage werden somit zunächst die beiden Steuerlager gegeneinander vorgespannt und sodann das erste Anschlagelement klemmend am Gabelschaft fixiert. Dies hat den Vorteil, dass beispielsweise zum Transport der Vorbau zusammen mit dem Lenker vom Gabelschaft gelöst werden kann, ohne dass bei der erneuten Montage ein Einstellen der Vorspannung der Steuerlager erforderlich ist.

Nachfolgend wird die Erfindung anhand einer bevorzugten Ausführungsform unter Bezugnahme auf die anliegenden Zeichnungen näher erläutert.

Es zeigen:
- Figur 1: eine schematische, perspektivische Ansicht der beiden Anschlagelemente,
- Figur 2: eine schematische perspektivische Draufsicht auf das Abdeckelement,
- Figur 3: eine teilweise geschnittene Ansicht des gesamten Lenkanschlags im montierten Zustand, und
- Figur 4: eine perspektivische, teilweise geschnittene Ansicht eines Lenksystems in Verbindung mit dem in den Figuren 1 bis 3 dargestellten Lenkanschlag.

Der Lenkanschlag weist ein erstes Anschlagelement 10 sowie ein zweites mit diesem zusammenwirkendes Anschlagelement 12 auf. Das erste Anschlagelement 10, das insbesondere ringförmig ausgebildet ist, weist zwei einander gegenüberliegende Anschläge 14, 16 auf. Jedes Anschlagelement 14, 16 weist auf seiner entgegen der Fahrtrichtung 18 weisenden Rückseite eine Anschlagfläche 20, 22 auf. Bei einem Verdrehen des Lenkers in Fahrtrichtung nach links ist der Einlenkwinkel dadurch begrenzt, dass die Anschlagfläche 20 gegen eine in Fahrtrichtung linke Anschlagfläche 24 des zweiten Anschlagelements 12 anschlägt. Entsprechend schlägt die Anschlagfläche 22 des Anschlages 16 bei einem extremen Lenkeinschlag nach rechts an die rechte Anschlagfläche 26 an.

Das erste Anschlagelement 10 wird in der dargestellten bevorzugten Ausführungsform klemmend an einem nicht dargestellten Gabelschaft fixiert. Hierzu weist das erste Anschlagelement einen Schlitz 28 auf, wobei die Schlitzbreite und somit der Innendurchmesser des ersten Anschlagelements durch ein Klemmelement wie eine Klemmschraube 30 verringert werden kann.

Das erste Anschlagelement weist im dargestellten Ausführungsbeispiel zwei Aussparungen 32, 34 auf. Diese Aussparungen sind jeweils auf der gegenüberliegenden Seite der Anschlagflächen 20, 22 der Anschläge 14, 16 angeordnet. Anders ausgedrückt, die beiden Aussparungen 32, 34 sind in Fahrtrichtung 18 vor den beiden Anschlägen 14, 16 angeordnet. Insofern ist es möglich, in diesem Bereich Leitungen in den Rahmen, insbesondere in das Gabelrohr des Rahmens einzuführen.

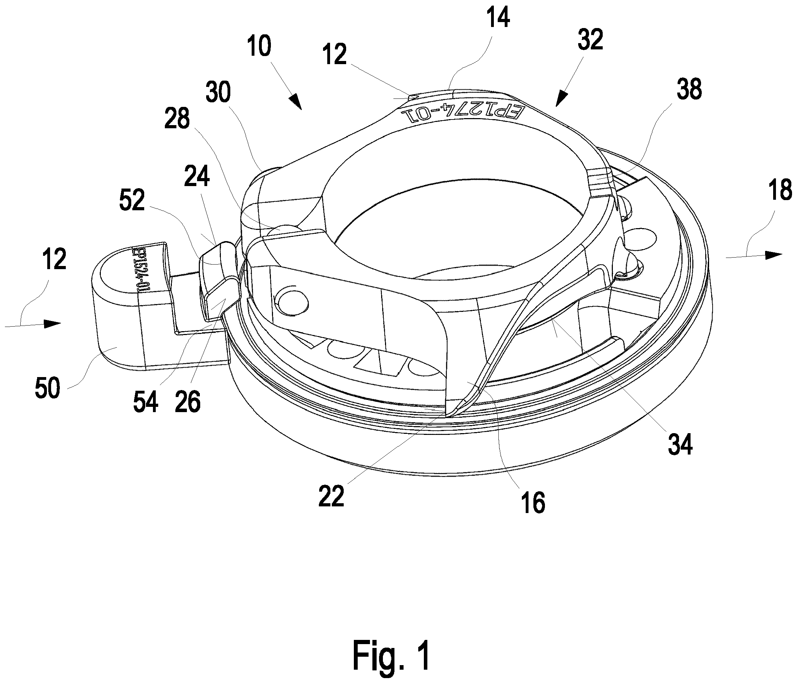

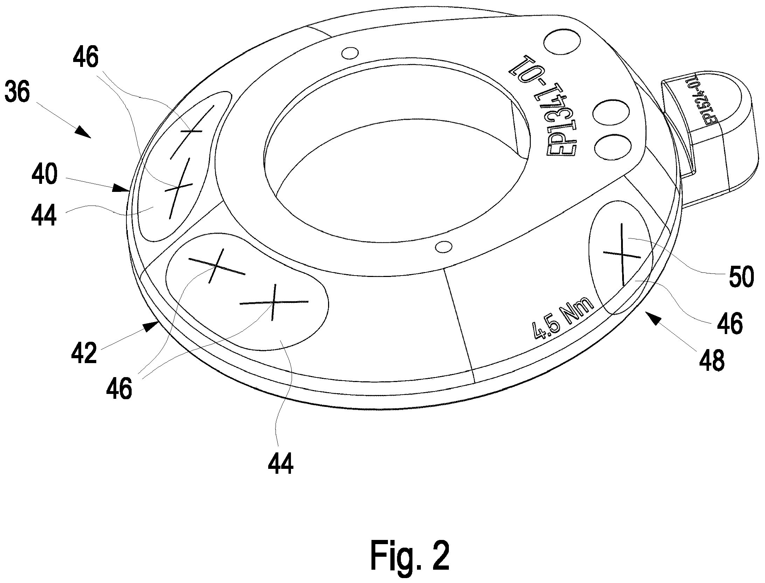

Zur Abdeckung des ersten Anschlagelements 10 ist ein vorzugsweise ebenfalls ringförmig ausgebildetes Abdeckelement 36 (Figur 2) vorgesehen. Das Abdeckelement 36 weist eine in der Figur nicht sichtbare nach unten weisende Nase auf, die in eine Ausnehmung 38 (Figur 1) des ersten Anschlagelements eingreift, so dass ein Verdrehen des Abdeckelements 16 vermieden ist.

Im Bereich der Aussparungen 32, 34 weist das Abdeckelement Durchgangsöffnungen 40, 42 auf. Beide Durchgangsöffnungen sind jeweils durch ein Verschlusselement 44 verschlossen, wobei jedes Verschlusselement 44 zwei kreuzförmige Schlitze zum Hindurchführen von Leitungen, Kabeln und dgl. aufweist, so dass diese dichtend hindurchgeführt werden können.

Im montierten Zustand ist die Durchgangsöffnung 42 oberhalb der Aussparung 32 und die Durchgangsöffnung 44 oberhalb der Aussparung 34 angeordnet.

Des Weiteren weist das Abdeckelement 36 eine Durchgangsöffnung 48 auf, die ebenfalls von einem Verschlusselement 50 mit Schlitzen 46 verschlossen ist. Die Durchgangsöffnung 46 dient zum Hindurchführen eines Werkzeuges und ist im montierten Zustand auf Höhe der Schraube 30 angeordnet.

Im Betrieb ist die Lenkkraft des ersten Anschlagelements 10 am Gabelschaft derart eingestellt, dass beim Anschlagen eines der beiden Anschläge 14, 16 sich zunächst das erste Anschlagelement auf dem Gabelschaft verdreht. Durch Lösen der Schraube 30 kann ein Zurückdrehen und erneutes Klemmen des ersten Anschlagelements auf einfache Weise erfolgen.

Das zweite Anschlagelement weist ein Halteelement 50 sowie einen Anschlag 52 auf. Der Anschlag 52 bildet die einander gegenüberliegenden Anschlagflächen 24, 26 aus. Der Anschlag 52 ist über einen Verbindungssteg 54 mit dem Halteelement 50 verbunden. Der Verbindungssteg 54 dient hierbei als Sollbruchstelle. Wenn beispielsweise ein Verdrehen des ersten Anschlagelements auf dem Gabelschaft aufgrund zu hoher Klemmkräfte oder beispielsweise aufgrund von Verschmutzungen nicht erfolgt, bricht der Verbindungssteg, um eine zu hohe Krafteinleitung über das Halteelement 50 in den Fahrradrahmen zu vermeiden.

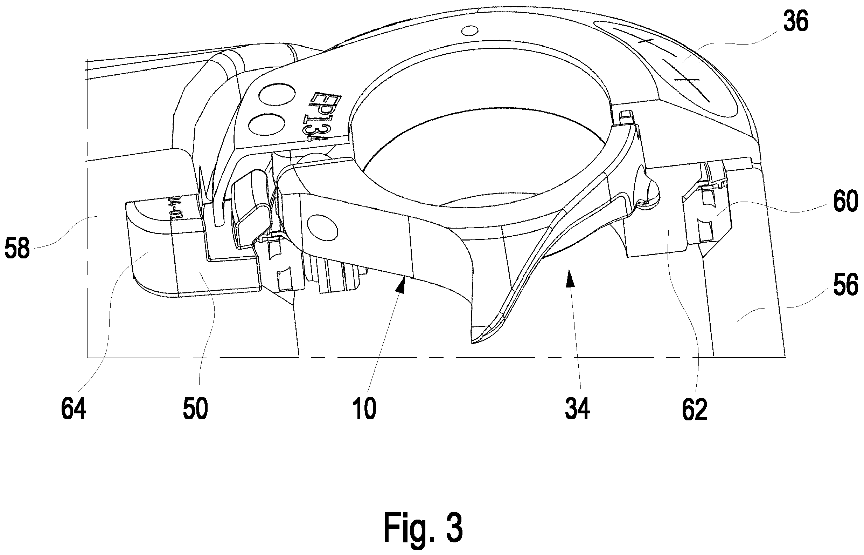

Im montierten Zustand (Figur 3) ist ein Gabelrohr 56 des Fahrradrahmens mit einem Oberrohr 58 verbunden bzw. einstückig ausgebildet. Innerhalb des Gabelrohrs 56 ist der Gabelschaft der Fahrradgabel angeordnet und über ein oberes Steuerlager 60 sowie ein nicht dargestelltes unteres Steuerlager drehbar gelagert. Im dargestellten Ausführungsbeispiel ist zur Fixierung der Steuerlager 60, jeweils ein Kompressionsring 62 vorgesehen. Dieser weist vorzugsweise ebenfalls Leistungsdurchführungen auf, sofern der Kompressionsring 62 auch im Bereich der Aussparungen 32, 34 angeordnet ist. Nach dem Vorspannen der beiden Steuerlager 60 erfolgt ein klemmendes Fixieren des ersten Anschlagelements 10, so dass unabhängig davon, ob der Vorbau montiert oder demontiert ist, die Vorspannung der Steuerlager beigehalten bleibt.

In einer Ausnehmung 64, die auf einer in Richtung des Gabelrohrs 56 weisenden Seite des Oberrohrs 58 vorgesehen ist, wird das Halteelement 50 des zweiten Anschlagelements 12 eingesteckt. Eine Fixierung erfolgt im dargestellten Ausführungsbeispiel durch das obere Steuerlager 60. Da das Halteelement 50 in der innerhalb des Oberrohrs 58 angeordneten Ausnehmung 54 angeordnet ist, ist dieses nicht sichtbar.

Oberhalb des ersten Anschlagelements 10 wird sodann das in Figur 3 nur schematisch dargestellte Abdeckelement 36 (Figur 2) angeordnet.

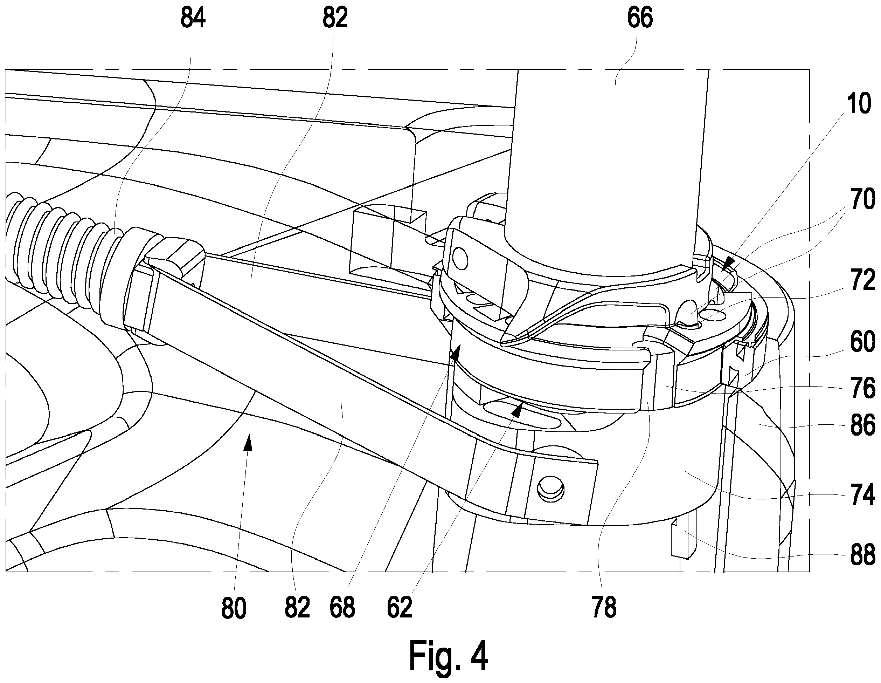

Bei dem in Figur 4 dargestellten Lenksystem handelt es sich um eine besonders bevorzugte Ausführungsform, bei der oberhalb des oberen Steuerlagers 60 das in den Figuren 1 bis 3 dargestellte, erste Anschlagelement 10 angeordnet ist. Anstelle des ersten Anschlagelements 10 kann auch ein insbesondere klemmend am Gabelschaft 66 angeordnetes Haltelement vorgesehen sein. Hierbei kann es sich um einen Klemmring handeln, der gegebenenfalls im Unterschied zu dem ersten Anschlagelement 10 keine zusätzliche Funktion aufweist. Unterhalb des ersten Anschlagelements 10 ist als Verbindungselement der Kompressionsring 62 vorgesehen. Dieser umgibt ebenfalls den Gabelschaft 66 und trägt an einer Außenseite 68 den Innenring des Lagers 60.

Zur formschlüssigen Verbindung und zur Übertragung von Drehmomenten weist das erste Anschlagelement 10 Ansätze 70 auf, die in korrespondierende Ausnehmungen 72 am Kompressionsring 62 eingreifen.

Unterhalb des Verbindungs- bzw. Kompressionsrings 62 ist ein Fixierelement 74 vorgesehen. Dieses ist im Wesentlichen ringförmig ausgebildet und weist insbesondere eine kreisringförmige Öffnung auf, in der der Gabelschaft 66 angeordnet ist. Zwischen dem Fixierelement 74 und dem Gabelschaft 66 kann ein geringfügiger Abstand vorgesehen sein, insbesondere ist hier keine Verbindung vorgesehen, die zur Kraftübertragung dient. Zur Kraftübertragung weist das Fixierelement 74 Ansätze 76 auf, die in Ausnehmungen 78 im Kompressionsring 62 eingreifen. Somit können von dem Fixierelement Kräfte und somit auch Momente über Ansätze 76 auf den Verbindungsring 62 übertragen werden. Von dem Verbindungsring 62 können über die Ansätze 70 die entsprechenden Kräfte auf das erste Anschlagelement 10 bzw. ein Halteelement übertragen werden. Dadurch dass das Anschlagelement 10 klemmend am Gabelschaft fixiert ist, erfolgt eine entsprechende Kraftübertragung auf den Gabelschaft 66.

Im dargestellten Ausführungsbeispiel ist mit dem Fixierelement 74 eine Lenkungs-Stabilisierungseinrichtung 80 verbunden. Die Lenkungs-Stabilisierungseinrichtung 80 weist im dargestellten Ausführungsbeispiel zwei bandförmige Stabilisierungselemente 82 auf, die auf einander gegenüberliegenden Seiten mit dem Fixierelement 74 verbunden sind. Die beiden bandförmigen Stabilisierungselemente 82 können elastisch ausgebildet sein und/oder über ein Federelement 84 mit dem Fahrradrahmen mittelbar oder unmittelbar verbunden sein. Durch Einschlagen des Lenkers und somit Drehen des Gabelschaftes 66 erfolgt ein Dehnen eines der beiden Bänder 82 und/oder ein Längen der Feder 84. Dies führt zu einem Rückstellmoment, sodass von dem Fixierelement 74 über die Ansätze 76, 70 auf das erste Anschlagelement 10 und somit wieder auf den Gabelschaft 66 übertragen werden. Hierdurch erfolgt ein Zurückdrehen des Lenkers in seine Neutralstellung.

Das Fixierelement 74 ist innerhalb eines Gabelrohrs 86 des Fahrradrahmens sowie zwischen dem oberen Lager 60 und dem nicht dargestellten unteren Lager angeordnet. Um ein Verrutschen des Fixierelements 74 in axiale Richtung, d.h. beispielsweise in Figur 4 nach unten zu vermeiden, ist im dargestellten Ausführungsbeispiel ein Längs-Halteelement 88 vorgesehen, bei dem es sich insbesondere um eine Hülse handelt. Diese kann auf einfache Weise dadurch auf dem Gabelschaft 66 fixiert werden, wenn der Gabelschaft unterhalb des Fixierelements 74 konisch ausgebildet ist und sich in Richtung des unteren Lagers aufweitet.

### Weitere Aspekte der Erfindung:

1. Lenksystem für Fahrradlenker, mit
   einem über zwei Lagerelemente (60) in einem Gabelrohr (86) eines Fahrradrahmens schwenkbar gelagerten Gabelschafts (66),
   einem am Gabelschaft (66) insbesondere oberhalb des oberen Lagerelements (60) fixierten Halteelement (10),
   einem zwischen den beiden Lagerelementen (60) angeordneten Fixierelement (74), und
   einer das Fixierelement (74) mit dem Halteelement (10) verbindenden Verbindungsrichtung (62).
2. Lenksystem für Fahrradlenker nach Aspekt 1, dadurch gekennzeichnet, dass das Halteelement (10) klemmend am Gabelschaft (66) fixiert ist.
3. Lenksystem für Fahrradlenker nach Aspekt 1 oder 2, dadurch gekennzeichnet, dass die Verbindungseinrichtung als eine rotatorische Verbindung zur Übertragung von Momenten ausgebildet ist, wobei die Verbindung insbesondere durch Formschluss ausgebildet ist.
4. Lenksystem für Fahrradlenker nach einem der Aspekten 1 bis 3, dadurch gekennzeichnet, dass die Verbindungseinrichtung einen Verbindungsring (62) aufweist, der den Gabelschaft (66) umgibt und zur formschlüssigen rotatorischen Verbindung Ansätze und/oder Ausnehmungen (78) aufweist, die mit Ausnehmungen und/oder Ansätzen (76) des Fixierelements (74) zusammenwirken.
5. Lenksystem für Fahrradlenker nach Aspekt 4, dadurch gekennzeichnet, dass der Verbindungsring (62) insbesondere formschlüssig mit dem Halteelement (10) verbunden ist, insbesondere über am Verbindungsring vorgesehene Ansätze und/oder Ausnehmungen (72), die mit am Halteelement (10) vorgesehenen Ansätzen (70) und/oder Ausnehmungen zusammenwirken.
6. Lenksystem für Fahrradlenker nach einem der Aspekte 4 bis 5, dadurch gekennzeichnet, dass der Verbindungsring (62) eine zumindest teil-ringförmige Außenfläche (68) aufweist, an der das obere Lagerelement (60) anliegt.
7. Lenksystem für Fahrradlenker nach einem der Aspekte 1 bis 6, gekennzeichnet durch ein Längs-Halteelement (88) zum Halten des Fixierelements (74) in axiale Richtung des Gabelschafts (66).
8. Lenksystem für Fahrradlenker nach einem der Aspekte 1 bis 7, dadurch gekennzeichnet, dass das Halteelement (10) und/oder der Verbindungsring (62) eine Aussparung (32, 34) zum Durchführen von Leitungen aufweisen.
9. Lenksystem für Fahrradlenker nach einem der Aspekte 1 bis 8, dadurch gekennzeichnet, dass das Halteelement als ein erstes Anschlagelement (10) ausgebildet und/oder mit einem ersten Anschlagelement (10) verbunden ist, wobei das erste Anschlagelement (10) zwei Anschläge (14, 16) aufweist und mit einem zweiten Anschlagelement (12) zusammenwirkt.
10. Lenksystem für Fahrradlenker nach einem der Aspekte 8 bis 9, dadurch gekennzeichnet, dass das zweite Anschlagelement (12) in einer Ausnehmung (64) im Fahrradrahmen, insbesondere im Oberrohr (34) des Fahrradrahmens anortenbar ist.
11. Lenksystem für Fahrradlenker nach einem der Aspekte 7 bis 10, dadurch gekennzeichnet, dass das zweite Anschlagelement (12) ein, insbesondere in die Ausnehmung (64) einsteckbares Halteelement und einen mit dem Halteelement (50) verbundenen Anschlag (52) aufweist.

## Patentansprüche

1. Lenksystem für Fahrradlenker, mit
einem über zwei Lagerelemente (60) in einem Gabelrohr (86) eines Fahrradrahmens schwenkbar gelagerten Gabelschafts (66),
einem am Gabelschaft (66) insbesondere oberhalb des oberen Lagerelements (60) fixierten Halteelement (10),
einem zwischen den beiden Lagerelementen (60) angeordneten Fixierelement (74), vorzugsweise zum Verbinden mit einer Lenkungs-Stabilisierungseinrichtung (80) und
einer das Fixierelement (74) mit dem Halteelement (10) verbindenden Verbindungsrichtung (62).

2. Lenksystem für Fahrradlenker nach Anspruch 1, **dadurch gekennzeichnet, dass** das Halteelement (10) klemmend am Gabelschaft (66) fixiert ist.

3. Lenksystem für Fahrradlenker nach Anspruch 1 oder 2, **dadurch gekennzeichnet, dass** die Verbindungseinrichtung als eine rotatorische Verbindung zur Übertragung von Momenten ausgebildet ist, wobei die Verbindung insbesondere durch Formschluss ausgebildet ist.

4. Lenksystem für Fahrradlenker nach einem der Ansprüche 1 bis 3, **dadurch gekennzeichnet, dass** die Verbindungseinrichtung einen Verbindungsring (62) aufweist, der den Gabelschaft (66) umgibt und zur formschlüssigen rotatorischen Verbindung Ansätze und/oder Ausnehmungen (78) aufweist, die mit Ausnehmungen und/oder Ansätzen (76) des Fixierelements (74) zusammenwirken.

5. Lenksystem für Fahrradlenker nach Anspruch 4, **dadurch gekennzeichnet, dass** der Verbindungsring (62) insbesondere formschlüssig mit dem Halteelement (10) verbunden ist, insbesondere über am Verbindungsring vorgesehene Ansätze und/oder Ausnehmungen (72), die mit am Halteelement (10) vorgesehenen Ansätzen (70) und/oder Ausnehmungen zusammenwirken.

6. Lenksystem für Fahrradlenker nach einem der Ansprüche 4 bis 5, **dadurch gekennzeichnet, dass** der Verbindungsring (62) eine zumindest teil-ringförmige Außenfläche (68) aufweist, an der das obere Lagerelement (60) anliegt.

7. Lenksystem für Fahrradlenker nach einem der Ansprüche 1 bis 6, **gekennzeichnet durch** ein Längs-Halteelement (88) zum Halten des Fixierelements (74) in axiale Richtung des Gabelschafts (66).

8. Lenksystem für Fahrradlenker nach einem der Ansprüche 1 bis 7, **dadurch gekennzeichnet, dass** die Lenkungs-Stabilisierungseinrichtung (80) ein Federelement (84) aufweist.

9. Lenksystem für Fahrradlenker nach einem der Ansprüche 1 bis 8, **dadurch gekennzeichnet, dass** die Lenkungs-Stabilisierungseinrichtung (80) zumindest teilweise im Oberrohr des Fahrradrahmens angeordnet ist.

10. Lenksystem für Fahrradlenker nach einem der Ansprüche 1 bis 9, **dadurch gekennzeichnet, dass** die Lenkungs-Stabilisierungseinrichtung (80) zwei, insbesondere bandförmig ausgebildete Stabilisierungselemente (82) aufweist, die vorzugsweise einander gegenüberliegend mit dem Fixierelement (74) verbunden sind.

11. Lenksystem für Fahrradlenker nach einem der Ansprüche 1 bis 10, **dadurch gekennzeichnet, dass** das Halteelement (10) und/oder der Verbindungsring (62) eine Aussparung (32, 34) zum Durchführen von Leitungen aufweisen.

12. Lenksystem für Fahrradlenker nach einem der Ansprüche 1 bis 11, **dadurch gekennzeichnet, dass** das Halteelement als ein erstes Anschlagelement (10) ausgebildet und/oder mit einem ersten Anschlagelement (10) verbunden ist, wobei das erste Anschlagelement (10) zwei Anschläge (14, 16) aufweist und mit einem zweiten Anschlagelement (12) zusammenwirkt.

13. Lenksystem für Fahrradlenker nach einem der Ansprüche 10 bis 12, **dadurch gekennzeichnet, dass** das zweite Anschlagelement (12) in einer Ausnehmung (64) im Fahrradrahmen, insbesondere im Oberrohr (34) des Fahrradrahmens anortenbar ist.

14. Lenksystem für Fahrradlenker nach einem der Ansprüche 10 bis 13, **dadurch gekennzeichnet, dass** das zweite Anschlagelement (12) ein, insbesondere in die Ausnehmung (64) einsteckbares Halteelement und einen mit dem Halteelement (50) verbundenen Anschlag (52) aufweist.
